# EUROPÄISCHE PATENTANMELDUNG

(11) **EP 4 302 910 A1**
(43) Veröffentlichungstag der Anmeldung: **10.01.2024**
(21) Anmeldenummer: 22183258.7
(22) Anmeldetag: 06.07.2022
(51) Int. Cl.: B23K 9/04, B29C 64/118, B33Y 50/02, G01C 11/00, G06T 17/00, B23K 31/12

(54) **VERFAHREN ZUM BETREIBEN EINER ADDITIVEN FERTIGUNGSMASCHINE UND ADDITIVE FERTIGUNGSMASCHINE**

(71) Anmelder: Siemens Aktiengesellschaft, 80333 München (DE)
(72) Erfinder: Janisch, Lucas, 83104 Tuntenhausen (DE); Reisch, Raven Thomas, 81379 München (DE); Kamps, Tobias, 80538 München (DE)
(74) Vertreter: Siemens Patent Attorneys

(57) **Zusammenfassung**

Die Erfindung betrifft ein Verfahren zum Betreiben einer additiven Fertigungsmaschine (10), durch die ein Werkstück (12) durch gerichtetes Applizieren von Material (14) gefertigt wird. Ferner betrifft die Erfindung eine additive Fertigungsmaschine (10).

## Beschreibung

Die Erfindung betrifft ein Verfahren zum Betreiben einer additiven Fertigungsmaschine gemäß dem Oberbegriff des Patentanspruchs 1. Ferner betrifft die Erfindung eine additive Fertigungsmaschine gemäß dem Patentanspruch 10.

Additive Fertigungsmaschinen dienen der additiven beziehungsweise generativen Fertigung, bei welcher aus einem Material, in der Regel insbesondere Schicht für Schicht, ein dreidimensionales Bauteil beziehungsweise ein dreidimensionales Werkstück gebildet werden kann. So sind 3D-Drucker bekannt, bei denen der Aufbau des Werkstücks durch Bewegen eines Druckkopfes, aus welchem Material auf einem Werkstückhalter beziehungsweise Drucktisch und später auf untere Schichten des Materials selbst appliziert wird, erfolgt. Dabei ist der Drucckopf relativ zum Drucktisch verlagerbar, sodass die Form des Werkstücks abgebildet werden kann. Ferner erfolgt der Aufbau insbesondere computergesteuert aus mehreren flüssigen und/oder festen Werkstoffen, wobei beim Aufbau in der Regel physikalische und/oder chemische Härtungs- und Schmelzprozesse stattfinden können.

Eine additive Fertigungsmethode, welche eine kosteneffektive Herstellung von großflächigen Metallteilen ermöglicht und als direkte Energiedeponierungsmethode (englisch: Direct Energy Deposition, kurz DED) klassifiziert wird und somit eine Unterkategorie der additiven Fertigung darstellt, ist die drahtbogenadditive Fertigung (englisch: Wire Arc Additive Manufacturing, kurz WAAM). Die WAAM zeichnet sich durch hohe Ablagerungsraten, niedrige Kosten und gute mechanische Eigenschaften der Teile aus. Dabei wird ein massiver Metalldraht als Ausgangsmaterial verwendet, welcher in einem als Wärmequelle dienenden elektrischen Lichtbogen geschmolzen wird und die dadurch entstehenden Tropfen als Material zum Aufbau des Werkstücks dienen.

Während des Aufbauprozesses beziehungsweise der additiven Fertigung können beispielsweise Defekte, wie Delamination, Oxidation, Poren, geometrische Verformung und/oder Durchbrände, aufgrund von ungeeigneten Prozessparametern und/oder Prozessinstabilitäten auftreten. Daher ist eine Qualitätsprüfung bei Werkstücken, welche insbesondere in der Luft- und/oder Raumfahrt, Schifffahrt, Eisenbahn und/oder im Gesundheitswesen verwendet werden sollen, unerlässlich.

Dabei ist die reale Bauteilgeometrie beziehungsweise die Ist-Geometrie des Werkstücks nach der additiven Fertigung nicht bekannt und kann von einer Soll-Geometrie abweichen.

Abweichungen von der Soll-Geometrie können zu Problemen in der Fertigung führen, beispielsweise kann der Druckkopf mit dem Werkstück kollidieren und/oder der Prozess aus dem Fokus laufen, sodass Defekte an der Fertigungsanlage und/oder am Werkstück entstehen können. Ferner ist es bei der Nachbearbeitung, beispielsweise beim Planfräsen von Funktionsflächen, von Vorteil wenn die Ist-Geometrie bekannt ist.

Im Stand der Technik wird diesen Problemen dadurch begegnet, dass nach der Fertigung des Werkstücks ein 3D-Modell mittels Scannen des Werkstücks durch Laserscanner oder Stereokameras durchgeführt wird. Solch ein Scan ist mit einem erhöhten Zeitaufwand im Postprozess verbunden, wobei insbesondere keine Einblicke während des Prozesses selbst gewonnen werden können und somit eine potentielle Kollision nicht verhindert werden kann.

Alternativ ist aus dem Stand der Technik bekannt, einen Linienscanner während des Prozesses zu verwenden. Dieser muss einen bestimmten Abstand zum Applikationsbereich, dem Bereich wo das Material aufgetragen wird, im Falle der WAAM beispielsweise der aktuelle Schweißpunkt, aufweisen und entsprechend mitgeführt werden. Durch das Mitführen dieses Linienscanners wird die in der Regel ohnehin komplexe Fertigungsplanung, welcher beispielsweise mittels rechnergestützter Fertigung (Computer Aided Manufacturing, kurz CAM) erstellt wird, besonders komplex, beispielsweise wegen der dafür erforderlichen Kabelführung. Der Lichtbogen ist zudem eine Störquelle des Linien- beziehungsweise Laserscanners, wodurch eine Messung nur möglich ist, wenn der Lichtbogen, beispielsweise zwischen dem Applizieren von zwei Schichten, ausgeschaltet ist. Dadurch dauert die Fertigung des Werkstücks lange und verursacht hohe Maschinenkosten.

Aufgabe der vorliegenden Erfindung ist es daher, ein Verfahren zum Betreiben einer additiven Fertigungsmaschine sowie eine additive Fertigungsmaschine bereitzustellen, durch welche auf besonders vorteilhafte Weise eine Prozesskontrolle während der additiven Fertigung ermöglicht wird und darüber hinaus die dreidimensionale Form des Werkstücks ermittelt werden kann.

Diese Aufgabe wird erfindungsgemäß durch die Gegenstände der unabhängigen Patentansprüche gelöst. Vorteilhafte Ausgestaltungen und Weiterbildungen der Erfindung sind in den abhängigen Patentansprüchen sowie in der Beschreibung und in der Zeichnung angegeben.

Ein erster Aspekt der Erfindung betrifft ein Verfahren zum Betreiben einer additiven Fertigungsmaschine, durch welche ein Werkstück durch gerichtetes Applizieren von Material aus einem Applizierkopf gefertigt wird und dieser dafür, also für das gerichtete Applizieren, relativ zu einer Werkstückaufnahme der Fertigungsmaschine verlagert wird.

Um nun auf besonders vorteilhafte Weise eine Prozesskontrolle zu ermöglichen, ist es erfindungsgemäß vorgesehen, dass bei dem Verfahren durch eine ortsfest zum Applizierkopf angeordnete Kamera während des Applizierens mehrere aufeinanderfolgende, insbesondere zeitlich aufeinanderfolgende, Aufnahmen zumindest eines Applikationsbereichs, innerhalb welchem dem zu fertigenden Werkstück Material hinzugeführt wird, erstellt werden, wobei durch einen Vergleich, beispielsweise mittels einer elektronischen Recheneinrichtung, jeweils wenigstens zwei aufeinanderfolgende Aufnahmen und der zugehörigen Stellung des Applizierkopf, insbesondere relativ zur Werkstückaufnahme und somit zum Werkstück, ein dreidimensionaler Ausschnitt des Werkstücks bestimmt beziehungsweise berechnet wird und somit während der Fertigung ein dreidimensionales Modell, insbesondere zumindest als Punktwolke, des Werkstücks erzeugt wird. Das Erzeugen des Modells erfolgt insbesondere durch Zusammenfügen der Ausschnitte.

Mit anderen Worten kann durch das Verfahren ein Erzeugen eines 3D-Modells des Werkstücks, welches insbesondere ein Bauteil und/oder Formteil darstellen kann, während der additiven Fertigung des Werkstücks erfolgen. Dazu wird das Werkstück mittels gerichteten Applizierens, also dem Aufbringen von Material, zuerst auf eine Werkstückaufnahme, welche beispielsweise als Druckbett fungiert, und schließlich auf den bereits gefertigten Teil des zu fertigenden Werkstücks gerichtet appliziert beziehungsweise angebracht. Dabei beschreibt "gerichtet", dass das Material im Wesentlichen dort an das Werkstück beziehungsweise die Werkstückaufnahme angefügt wird, wo das fertige Werkstück Material aufweisen soll.

Für den gerichteten Materialauftrag kann der Applizierkopf, welcher beispielsweise als Druckknopf oder im Falle der WAAM als Schweißspitze ausgebildet ist, relativ zur Werkstückaufnahme und somit zum Werkstück verlagert werden, wodurch die Form des Werkstücks abgebildet werden kann. Die aufeinanderfolgenden Aufnahmen können insbesondere Videoaufnahmen der Kamera sein, sodass das 3D-Modell des gedruckten beziehungsweise additiv gefertigten Bauteils auf Basis von 2D-Videoaufnahmen des Druckprozesses erzeugt wird. Dabei wird die aufnehmende Kamera für den Aufnahmevorgang am Druckknopf angebracht und auf den Applikationsbereich gerichtet. Der Applikationsbereich ist bei der WAAM beispielsweise das Schmelzbett. Im Falle des 3D-Druckers für PLA oder dergleichen kann der Applikationsbereich das Ende des Extruders sein, aus dem das Material auf das zu fertigende Werkstück tritt.

Somit ist in den Aufnahmen der Kamera der Applikationsbereich und dessen Umgebung enthalten, sodass in den Aufnahmen Informationen zum dem neu auf die Werkstückaufnahme beziehungsweise dem bereits gefertigten Teil des Werkstücks aufgetragenen Material enthalten ist. Für die Generierung der 3D-Information beziehungsweise des jeweiligen 3D-Ausschnittes werden repetitiv zwei aufeinanderfolgende Bilder der Videoaufnahme beziehungsweise zwei Aufnahmen, insbesondere nach dem Prinzip der Photogrammetrie beziehungsweise Stereobildauswertung, verarbeitet. Zusätzlich wird die räumliche Position und Orientierung, also die Stellung beziehungsweise Pose des Applizierkopfes verwendet, um die lokal ermittelte 3D-Information beziehungsweise den 3D-Ausschnitt dem erzeugten Werkstück global zuordnen zu können.

Durch das Verfahren kann auf die im Stand der Technik benötigten Scans, welche eine zusätzliche Sensorik benötigen, verzichten werden, sodass ein Vorteil des erfindungsgemäßen Verfahrens eine besonders große Kosten- und/oder Zeitersparnis ist. Darüber hinaus ergeben sich Verbesserungen bei der Informationsgewinnung für die Prozessüberwachung und eine Qualitätsbewertung. Da die Erzeugung des dreidimensionalen Modellprozesses parallel, also während der Fertigung, stattfindet, kann durch manuelle und/oder automatisierte Überprüfung des 3D-Modells eine frühzeitige Erkennung von Fertigungsfehlern ermöglicht werden und somit unnötige Prozessschritte und/oder Kollisionen vermieden werden. Die prozessparallele Messung bietet außerdem den Vorteil, neben der Au-ßengeometrie auch nützliche Informationen zwischen beispielsweise den Lagen und dem Schweißbad bei der WAAM aufzuzeichnen und mit der zugehörigen räumlichen Information zu verknüpfen. Da es durch den Abgleich somit ermöglicht ist, die Ist-Geometrie mit der Soll-Geometrie zu vergleichen, ist eine Erkennung von Verzug und/oder Hohlräumen besonders einfach. Zudem kann das dreidimensionale Modell, welches durch das erfindungsgemäße Verfahren erzeugt wird, dazu genutzt werden, einen digitalen Zwilling des Werkstücks aufzubauen sowie Prozesseingriffe zur Behebung und/oder Vermeidung von Defekten beispielsweise mit Hilfe einer prädiktiven Regelung zu ermöglichen.

Dabei bietet sich das erfindungsgemäße Verfahren insbesondere für additive Fertigungsmaschinen an, welche DED und/oder Materialextrusion (beispielsweise FDM) verwenden.

In vorteilhafter Ausgestaltung der Erfindung werden der jeweilige 3D-Ausschnitt und somit das aus den zusammengefügten 3D-Ausschnitten erzeugte 3D-Modell durch Photogrammetrie bestimmt. Mit anderen Worten werden durch Bildmessung aus den einzelnen Aufnahmen, welche jeweils als Photographie vorliegen können, eine Lage und Form des Objekts, also des Werkstücks, insbesondere indirekt beispielsweise durch Bildinterpretation bestimmt. Bei der Photogrammetrie steht insbesondere die dreidimensionale geometrische Rekonstruktion des aufgenommenen Objekts im Vordergrund. Daher ergibt sich der Vorteil, dass das Verfahren besonders vorteilhaft zum Erzeugen des jeweiligen dreidimensionalen Ausschnitts und somit des dreidimensionalen Modells verwendet werden kann.

In einer weiteren vorteilhaften Ausgestaltung der Erfindung erfolgt die Fertigung des Werkstücks durch direkte Energiezuführung und/oder Aushärten und/oder Extrusion des Materials. Zusätzlich oder alternativ erfolgt das Applizieren durch zumindest teilweises Schmelzen des Materials und/oder eines Teils des Werkstücks beziehungsweise des bereits gebildeten Teils des Werkstücks. Mit anderen Worten wird das Werkstück mittels Direct Energy Deposition (DED) gebildet, dazu kann beispielsweise lasergestützte Netzformung (englisch: Laser Engineered Net Shaping, kurz LENS), additive Fertigung mittels Elektronenstrahl (englisch: Electron Beam Additive Manufacturing, kurz EBAM), schnelle Plasmabeschichtung (englisch: Rapid Plasma Deposition, kurz RPD) und/oder WAAM zum Einsatz kommen. Zusätzlich oder alternativ können mittels Extrusion insbesondere Polyvinylchlorid, Polyethylen, Polypropylen und/oder weitere Verbundwerkstoffe als auch Keramiken verarbeitet werden. Insbesondere eignen sich für das Verfahren additive Fertigungsmaschinen, welche multiaxial-geometrisch getriebene Drehkipptische, beispielsweise als Werkstückaufnahme, aufweisen. Dadurch ergibt sich der Vorteil, dass die Fertigungsmaschine, welche das erfindungsgemäße Verfahren ausführt beziehungsweise mit diesem betrieben wird, besonders flexibel ausgebildet sein kann.

In weiterer vorteilhafter Ausgestaltung der Erfindung wird für das Verhalten des Materials bei der Applikation beziehungsweise beim Applizieren ein mathematisches Modell für die Bestimmung des dreidimensionalen Ausschnitts verwendet. Mit anderen Worten ist das Verhalten der additiven Fertigungsmaschine beim gerichteten Applizieren mathematisch zumindest durch ein Modell beschreibbar. Dadurch ist bekannt, wie sich das Material verhält, wenn es beim Bilden des Werkstücks aus dem Applizierkopf auf die Werkstückaufnahme beziehungsweise den bereits gebildeten Teil des Werkstücks auftritt. So können beispielsweise aufgrund von Prozessparametern eine Höhe und/oder ein Querschnitt des aufgetragenen Materials mathematisch beschrieben werden. Bei der WAAM kann insbesondere eine Schweißspur, Schweißspurbreite und/oder ein Schweißspurquerschnitt und somit eine Form zumindest des neu aufgetragenen Materials ermittelt werden. Somit können beispielsweise Bereiche des Werkstücks, die in der Aufnahme der Kamera beziehungsweise im Kamerabild nicht zu sehen sind, durch das mathematische Modell des Materialauftrags vervollständigt werden. Durch diesen Vorgang können die Vorteile der mathematischen Modellierung und der realen Daten beziehungsweise Aufnahmen kombiniert werden. Dadurch ergibt sich der Vorteil, dass das dreidimensionale Modell besonders präzise bestimmt werden kann, wodurch die Prozessüberwachung besonders vorteilhaft ermittelt wird.

In weiterer vorteilhafter Ausgestaltung der Erfindung wird zumindest ein Teil einer Außenfläche des dreidimensionalen Modells durch Triangulation beziehungsweise Triangulieren angepasst. Mit anderen Worten können die einzelnen Objektpunkte einer insbesondere beim Erzeugen des dreidimensionalen Ausschnitts beziehungsweise des 3D-Modells gebildeten Punktwolke mittels Triangulationsverfahren zu Flächen verknüpft und somit ein Flächenmodell des Werkstücks erzeugt werden. Dabei wird ein Netz von Dreiecken im Raum, die auf einer vorgegebenen Fläche insbesondere der Außenfläche liegen, erzeugt, wodurch der dreidimensionale Abschnitt geformt werden kann. Dadurch ergibt sich der Vorteil, dass das dreidimensionale Modell besonders präzise und/oder besonders effizient geformt werden kann. Dadurch können auf besonders vorteilhafte Weise eine Prozesskontrolle und/oder eine Qualitätssicherung stattfinden.

In weiterer vorteilhafter Ausgestaltung der Erfindung wird eine beim Bilden beziehungsweise beim Erzeugen des 3D-Modells erzeugte Punktwolke beziehungsweise die Punktwolke prozesssynchron, also während der Fertigung, anhand bereits applizierten Materials analysiert und/oder erweitert. Mit anderen Worten wird eine prozesssynchrone Untersuchung der entstehenden Punktwolke durchgeführt, wobei Informationen genutzt werden, die aus vorherigen Lagen beziehungsweise einem bereits durchgeführten Applizieren von Material bekannt sind. Dadurch ergibt sich der Vorteil, dass beispielsweise auftretende Verformungen während der Fertigung besonders vorteilhaft erkannt werden können. Ein weiterer Vorteil ist, dass das dreidimensionale Modell besonders präzise erstellt werden kann.

In weiterer vorteilhafter Ausgestaltung der Erfindung wird beim Bilden beziehungsweise beim Erzeugen des 3D-Modells ein Graue-Box-Modell (englisch: Grey Box Model) verwendet, wobei ein Soll-Zustand des Werkstücks bekannt ist und insbesondere als Input für das Graue-Box-Modell verwendet wird. Mit anderen Worten wird eine partielle theoretische Struktur, beispielsweise ein CAD-Modell des 3D-Modells, mit den gemessenen beziehungsweise ermittelten Daten beziehungsweise Informationen aus den Aufnahmen und/oder der Stellung des Applizierkopfes kombiniert. Somit sind Vorabinformationen des Werkstücks bekannt, und durch das Graue-Box-Modell kann eine potentielle Abweichung vom Soll-Zustand besonders einfach geklärt werden. Dadurch ergibt sich der Vorteil, dass eine besonders gute Prozessüberwachung und/oder Qualitätskontrolle durchgeführt werden kann.

In weiterer vorteilhafter Ausgestaltung der Erfindung werden Punktewolken der dreidimensionalen Ausschnitte in einer Baumstruktur kombiniert und/oder organisiert werden beziehungsweise werden die dreidimensionalen Ausschnitte, insbesondere in ihrer Form als Punktwolke, in einer Baumstruktur organisiert. Mit anderen Worten wird die Punktwolke beispielsweise innerhalb eines Octrees und/oder KD-Trees organisiert, wodurch die Kontextsuche innerhalb der Punktwolke besonders effizient gestaltet werden kann. Dabei ist die Baumstruktur eine bestimmte Datenstruktur, welche beispielsweise Knoten aufweist. Dabei kann die Baumstruktur genutzt werden, Datensätze beziehungsweise die Punktwolke hierarchisch zu gliedern, wodurch diese beispielsweise besonders vorteilhaft analysiert werden kann. Dadurch ergibt sich der Vorteil, dass das Verfahren besonders effizient durchgeführt werden kann und somit die Fertigungsmaschine besonders vorteilhaft betrieben werden kann.

In weiterer vorteilhafter Ausgestaltung wird auf eine Außenfläche des dreidimensionalen Modells beziehungsweise des 3D-Modells eine Textur angepasst. Mit anderen Worten wird auf das berechnete Modell eine insbesondere aus den einzelnen Aufnahmen generierte Textur projiziert, um somit ein vollständig virtuelles Abbild des Werkstücks zu erhalten. Dadurch ergibt sich der Vorteil, dass ein digitaler Zwilling des Werkstücks bereitgehalten werden kann, welcher beispielsweise eine Simulationen weiterer Arbeitsgänge beispielsweise das Planschleifen beziehungsweise Planfräsen von Funktionsflächen ermöglicht.

Ein zweiter Aspekt der Erfindung betrifft eine additive Fertigungsmaschine zur Fertigung eines Werkstücks durch gerichtetes Applizieren von Material aus einem Applizierkopf, welcher, unter anderem für das Applizieren, relativ zu einer Werkstückaufnahme der Fertigungsmaschine verlagerbar ist, wobei die Fertigungsmaschine dazu ausgebildet ist, ein Verfahren gemäß dem ersten Aspekt der Erfindung durchzuführen.

Mit anderen Worten weist die erfindungsgemäße Fertigungsmaschine eine ortsfest zum Applizierkopf angeordnete Kamera auf, welche dazu ausgebildet ist, während des Applizierens mehrere aufeinanderfolgende Aufnahmen zumindest eines Applikationsbereichs, innerhalb welchem dem zu fertigenden Werkstück Material hinzuführbar ist, zu erstellen, wobei beispielsweise eine Steuerungsvorrichtung, welche als elektronische Recheneinrichtung ausgebildet sein kann, für einen Vergleich von jeweils wenigstens zwei aufeinanderfolgenden Aufnahmen und der zugehörigen Stellung des Applizierkopfes vorgesehen ist, wodurch zumindest ein dreidimensionaler Teil beziehungsweise Ausschnitt eines dreidimensionalen Modells des Werkstücks erzeugbar ist, sodass während der Fertigung des Werkstücks ein dreidimensionales Modell des letzteren erzeugt werden kann.

Dabei sind vorteilhafte Ausgestaltungen und Weiterbildungen des ersten Aspekts der Erfindung als vorteilhafte Ausgestaltungen und Weiterbildungen des zweiten Aspekts der Erfindung anzusehen und umgekehrt.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Es zeigt:
- FIG 1: eine schematische Ansicht einer additiven Fertigungsmaschine, welche durch ein Verfahren betreibbar ist, bei welchem eine Kamera aufeinanderfolgende Aufnahmen erzeugt; und
- FIG 2: zwei aufeinanderfolgende Aufnahmen der Kamera, erstellte gemäß dem Verfahren.

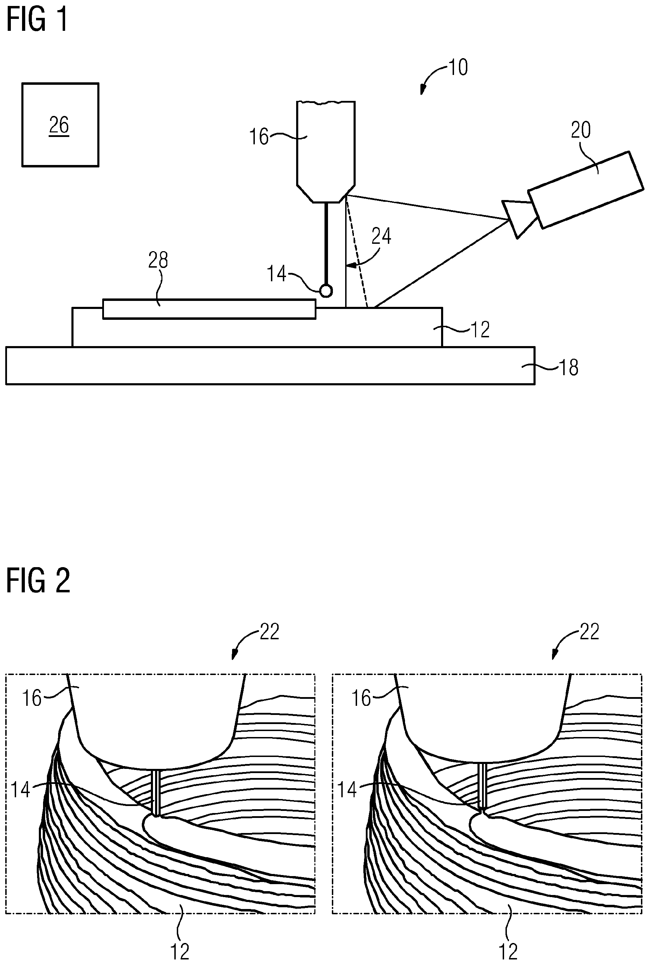

FIG 1 zeigt eine schematische Ansicht einer additiven Fertigungsmaschine 10, durch welche ein Werkstück 12 durch gerichtetes Applizieren von Material 14 aus einem Applizierkopf 16 gefertigt wird und dieser dafür relativ zu einer Werkstückaufnahme 18 der Fertigungsmaschine 10 verlagert wird beziehungsweise verlagerbar ist.

Damit für den Prozess der additiven Fertigung des Werkstücks 12 durch die Fertigungsmaschine 10 eine besonders vorteilhafte Prozessüberwachung und eine anschließende Qualitätskontrolle des Werkstücks 12 ermöglicht wird, ist eine ortsfest zum Applizierkopf 16 angeordnete Kamera 20 vorgesehen, welche während des Applizierens mehrere, insbesondere zeitlich, aufeinanderfolgende Aufnahmen 22 zumindest eines Applikationsbereichs 24, innerhalb welchem dem zu fertigenden Werkstück 12, also dem bereits gebildeten Teil des Werkstücks 12, Material 14 hinzugefügt wird, erstellt. Durch einen Vergleich, welcher beispielsweise durch eine Steuerungseinrichtung 26, welche als elektronische Recheneinrichtung ausgebildet sein kann, der Fertigungsmaschine 10 durchgeführt wird, von jeweils wenigstens zwei aufeinanderfolgenden Aufnahmen 22 und einer zugehörigen jeweiligen Stellung des Applizierkopfes 16 wird ein dreidimensionaler Ausschnitt des Werkstücks 12 bestimmt beziehungsweise berechnet. Somit kann während der Fertigung ein dreidimensionales Modell, welches insbesondere zumindest vorerst als Punktwolke erfasst und aus dieser gebildet wird, des Werkstücks 12 erzeugt werden. Dabei ist der Applizierkopf 16 des Ausführungsbeispiels als Schweißkopf ausgebildet, da es sich bei der additiven Fertigungsmaschine 10 beziehungsweise dem Fertigungsverfahren um ein Wire Arc Additive Manufacturing oder kurz WAAM handelt.

Die Werkstückaufnahme 18 ist insbesondere ein Druckbett beziehungsweise eine Aufnahme, auf welcher der zuerst gefertigte Teil des zu fertigenden Werkstücks 12 haftet, wodurch dieser mitsamt der Werkstückaufnahme 18 gegenüber dem Applizierkopf 16 verlagert werden kann, wodurch dieser und die Werkstückaufnahme 18 multiaxial-translatorisch und/oder rotatorisch gegeneinander verlagerbar sind.

Der Vergleich zwischen den wenigstens zwei aufeinanderfolgenden Aufnahmen 22 geschieht insbesondere durch Photogrammetrie. Der Sichtbereich der Kamera 20, welcher auf den Applikationsbereich 24 ausgerichtet ist, umfasst beispielsweise bei der WAAM ein Schmelzbad 28, innerhalb welchem das Material 14 flüssig ist. So wird bei der WAAM aufgrund einer Spannung zwischen dem Applizierkopf 16 und dem bereits gebildeten Teil des Werkstücks 12 ein Lichtbogen erzeugt, wodurch ein durch den Applizierkopf 16 zugefügter Draht schmilzt und dessen schmelzende Tropfen als Material 14 gerichtet appliziert werden.

Bei der WAAM wird eine direkte Energiezuführung in das Material 14 ermöglicht, was ein spezieller Untertyp der additiven Fertigung ist. Zusätzlich oder alternativ kann auch das Applizieren beziehungsweise Fertigen durch Aushärten des Materials 14 und/oder zumindest teilweises Schmelzen und insbesondere auch durch Extrudieren erfolgen.

Die hier vorgestellte additive Fertigungsmaschine 10 eignet sich zum Durchführen eines Verfahrens, bei welchem das dreidimensionale Modell des Werkstücks 12 während der additiven Fertigung des Werkstücks 12 selbst erzeugt wird.

Durch das vorgestellte Verfahren und die vorgestellte additive Fertigungsmaschine 10 kann ein 3D-Modell eines gedruckten Bauteils, dem Werkstück 12, auf Basis von 2D-Videoaufnahmen während der Fertigung, also insbesondere während des Druckprozesses, erzeugt werden. Dazu ist die Kamera 20 ortsfest am Applizierkopf 16 ausgerichtet, das heißt, dass sie ihre Position und Orientierung gegenüber dem Druckknopf, insbesondere beziehungsweise dem dort stattfindenden Materialaustritt für das Material 14, nicht ändert.

FIG 2 zeigt exemplarisch zwei einzelne aufeinanderfolgende Aufnahmen 22, beispielsweise aus dem durch die Kamera 20 erzeugten Video. Für die Generierung der 3D-Information beziehungsweise der jeweiligen Ausschnitte, durch deren Zusammensetzen das dreidimensionale Modell gebildet wird, werden repetitiv zwei aufeinanderfolgende Bilder beziehungsweise Aufnahmen 22, insbesondere nach dem Prinzip der Photogrammetrie, also der Stereobildauswertung, verarbeitet. Zusätzlich wird die räumliche Position und Orientierung, also die Stellung des Applizierkopfes 16, verwendet, um die Position des jeweiligen, aus den Aufnahmen gebildeten Ausschnitts im gesamten dreidimensionalen zu erzeugenden Modell zu bestimmen. In einem weiteren Schritt des Verfahrens kann zumindest ein mathematisches Modell dazu dienen, das datenbasierte Modell, also die aus den Ausschnitten ermittelte Punktwolke, zu ergänzen, wozu beispielsweise insbesondere aufgrund einer bekannten finalen beziehungsweise Soll-Geometrie des Werkstücks 12 ein sogenanntes Graue-Box-Verfahren verwendet werden kann. Somit können beispielsweise Bereiche des Bauteils, die in den Aufnahmen nicht zu sehen sind, durch das mathematische Modell des aktuell applizierten Materials 14, bei der WAAM die Schweißspur, vervollständigt werden. Die Tabelle 1 zeigt mögliche mathematische Modelle der Schweißnaht.

**Tabelle 1: Schweißnahtmodelle**

| Modell | Funktion y | Schweißspurhöhe h | Schweißspurbreite w | Schweiß spurquerschnitt A |
|---|---|---|---|---|
| symmetrische Parabel | a+c*x^2 | a | 2*(-a/c)^1/2 | 4/3*a* (-a/c)^1/2 |
| Kosinusmodell | a*cos(b *x) | a | π/b | 2a/b |
| Bogenmodell | (a^2-x^2)^1/ 2+b | a-b | 2*(a^2-b^2)^1/2 | arccos(-b/a)-b*(a^2-b^2)^1/2 |

Die verwendeten Modelle können auch künstliche Neuronale Netze umfassen und sowohl für einlagige-/einspurige als auch ein/mehrlagige Bauteile umfassen.

Durch die Verwendung des mathematischen Modells mit den aus den Aufnahmen erhaltenen Daten können die Vorteile einer mathematischen Modellierung und reellen Daten kombiniert werden. Es wird daher vorteilhaft ein mathematisches Modell für das Verhalten des Materials 14 bei der Applikation zum Bestimmen des jeweiligen Ausschnitts verwendet.

Weiterhin können einzelne Punkte der Punktwolke mittels Triangulationsverfahren zu Flächen verknüpft werden und somit ein Flächenmodell aus dem Modell für das Werkstück 12 gewonnen werden. Mit anderen Worten wird durch Triangulation zumindest ein Teil der Außenfläche des dreidimensionalen Modells angepasst.

Ferner können aus diesem berechneten Flächenmodell in Kombination mit den einzelnen Aufnahmen Texturen generiert und auf das Modell beziehungsweise an Außenflächen des Modells angepasst werden. So kann ein vollständiges virtuelles Abbild beziehungsweise ein virtueller Zwilling des Werkstücks 12 erzeugt werden.

Zusätzlich können durch prozesssynchrone Untersuchungen der Punktwolke beziehungsweise beim Bestimmen und/oder Erfassen der jeweiligen Ausschnitte aus den Aufnahmen die dort gewonnenen Informationen genutzt werden, um aus einer vorherigen Lage beziehungsweise aus vorherigen Aufnahmen das Graue-Box-Modell zu erweitern und die in dem Grauen-Box-Modell hinterlegte Information der Soll-Geometrie zu nutzen, um Abweichungen von dieser zu erklären.

Dabei eignet sich die Punktwolke dazu, als Octree und/oder KD-Tree und somit als Datenbaumstruktur hinterlegt und ausgewertet zu werden, wodurch das Verfahren besonders effizient durchgeführt werden kann.

Durch die vorgestellte Fertigungsmaschine 10 und das Verfahren für ihren Betrieb können eine Qualitätssicherung des Werkstücks 12 und eine Prozesskontrolle besonders vorteilhaft gewährleistet werden, sodass sich die Fertigungsmaschine 10 beispielsweise besonders vorteilhaft eignet, Teile für Luft- und/oder Raumfahrt, Schifffahrt, Eisenbahn und/oder das Gesundheitswesen herzustellen.

Es wird eine besonders vorteilhafte Methode einer prozessparallelen Generierung von 3D-Modellen für additiv gefertigte Teile auf Basis von Videosequenzen vorgestellt, wobei diese prozessparallele Messung beispielsweise den Vorteil bietet, neben Außengeometrien auch nützliche Informationen zwischen den Lagen und dem Schweißbad beziehungsweise Schmelzbad 28 aufzuzeichnen und mit zugehörigen räumlichen Informationen zu verknüpfen, sodass durch einen Abgleich mit einer Soll-Geometrie die Erkennung eines Verzugs und/oder eines Hohlraums des Werkstücks 12 vereinfacht wird. Darüber hinaus kann aufgrund der gegebenen Möglichkeit der Prozessüberwachung beispielsweise eine Kollision zwischen Applizierkopf 16 und Werkstück 12 und/oder Werkstückaufnahme 18 vermieden werden.

Durch das hier Gezeigte wird ein dreidimensionales Abbild des Bauteils beziehungsweise des Werkstücks 12 insbesondere ohne zusätzliche Sensorik außer der Kamera 20 bereits während des Fertigungsprozesses ermöglicht mittels der additiven Fertigungsmaschine 10 ermöglicht.

### Bezugszeichenliste

- 10: Fertigungsmaschine
- 12: Werkstück
- 14: Material
- 16: Applizierkopf
- 18: Werkstückaufnahme
- 20: Kamera
- 22: Aufnahme
- 24: Applikationsbereich
- 26: Steuerungseinrichtung
- 28: Schmelzbad

## Patentansprüche

1. Verfahren zum Betreiben einer additiven Fertigungsmaschine (10), durch welche ein Werkstück (12) durch gerichtetes Applizieren von Material (14) aus einem Applizierkopf (16) gefertigt wird und dieser dafür relativ zu einer Werkstückaufnahme (18) der Fertigungsmaschine (10) verlagert wird,
durch gekennzeichnet, dass
durch eine ortsfest zum Applizierkopf (16) angeordnete Kamera (20) während des Applizierens mehrere aufeinanderfolgenden Aufnahmen (22) zumindest eines Applikationsbereichs (24), innerhalb welchem dem zu fertigenden Werkstück (12) Material (14) hinzugeführt wird, erstellt werden,
wobei durch einen Vergleich jeweils wenigstens zwei aufeinanderfolgender Aufnahmen (22) und einer zugehörigen Stellung des Applizierkopfes (16) eine dreidimensionaler Ausschnitt des Werkstücks (12) bestimmt wird und somit während der Fertigung ein dreidimensionales Modell des Werkstücks (12) erzeugt wird.

2. Verfahren nach Anspruch 1, **dadurch gekennzeichnet, dass** der jeweilige dreidimensionale Ausschnitt durch Photogrammetrie bestimmt wird.

3. Verfahren nach Anspruch 1 oder 2, **dadurch gekennzeichnet, dass** die Fertigung des Werkstücks (12) durch direkte Energiezuführung und/oder Aushärten und/oder Extrusion des Materials (14) und/oder das Applizieren durch zumindest teilweises Schmelzen des Materials (14) und/oder eines Teils des Werkstücks (12) erfolgt.

4. Verfahren nach einem der vorhergehenden Ansprüche, **dadurch gekennzeichnet, dass** ein mathematisches Modell für das Verhalten des Materials (14) beim Applizieren zum Bestimmen des dreidimensionalen Ausschnitts verwendet wird.

5. Verfahren nach einem der vorhergehenden Ansprüche, **dadurch gekennzeichnet, dass** zumindest ein Teil einer Außenfläche des dreidimensionalen Modells durch Triangulation angepasst wird.

6. Verfahren nach einem der vorhergehenden Ansprüche, **dadurch gekennzeichnet, dass** eine beim Bilden des dreidimensionalen Modells erzeugte Punktwolke prozesssynchron anhand bereits applizierten Materials (14) analysiert und/oder erweitert wird.

7. Verfahren nach einem der vorhergehenden Ansprüche, **dadurch gekennzeichnet, dass** ein Graue-Box-Modell beim Erzeugen des dreidimensionalen Modells verwendet wird, wobei ein Soll-Zustand des Werkstücks (12) bekannt ist.

8. Verfahren nach einem der vorhergehenden Ansprüche, **dadurch gekennzeichnet, dass** die Punktewolken der dreidimensionalen Ausschnitte in einer Baumstruktur kombiniert und/oder organisiert werden.

9. Verfahren nach einem der vorhergehenden Ansprüche, **dadurch gekennzeichnet, dass** auf eine Außenfläche des dreidimensionalen Modells eine Textur angepasst wird.

10. Additive Fertigungsmaschine (10) zur Fertigung eines Werkstücks (12) durch gerichtetes Applizieren von Material (14) aus einem Applizierkopf (16), welcher relativ zu einer Werkstückaufnahme (18) der Fertigungsmaschine (10) verlagerbar ist, und welche dazu ausgebildet ist, ein Verfahren nach einem der vorhergehenden Ansprüche durchzuführen.
